# EUROPEAN PATENT APPLICATION

(11) **EP 4 001 732 A1**
(43) Date of publication of application: **25.05.2022**
(21) Application number: 19937677.3
(22) Date of filing: 16.07.2019
(51) Int. Cl.: F16M 13/04, F16M 11/12, F16M 11/18

(54) **HANDHELD GIMBAL**

(71) Applicant: SZ DJI Technology Co., Ltd., Shenzhen, Guangdong 518057 (CN)
(72) Inventor: YANG, Jian, Shenzhen, Guangdong 518057 (CN); BEI, Shimeng, Shenzhen, Guangdong 518057 (CN); DONG, Xin, Shenzhen, Guangdong 518057 (CN)
(74) Representative: Goddar, Heinz J.
(86) International application number: PCT/CN2019/096209
(87) International publication number: WO 2021/007784

(57) **Abstract**

A handheld gimbal (100). The handheld gimbal (100) includes a handle (10), a first axis assembly (20), and a first lock assembly (23). The first axis assembly (20) includes a first motor (21) connected to one end of the handle (10) and a first axis arm (22). The first axis arm (22) is connected to a rotor of the first motor (21). The first lock assembly (23) includes a first lock assembly (231) and a second lock assembly (232). The handheld gimbal (100) can switch back and forth between the storage state and the leveled state. When the handheld gimbal (100) is in the storage state or the leveled state, the first lock member (231) and the second lock member (232) are cooperatively connected to lock rotation of the first axis arm (22), so that the handheld gimbal (100) maintains in the storage state or the leveled state. The first lock member (231) can be separated from the second lock member (232) to unlock the rotation of the first axis arm (22), so that the handheld gimbal (100) can switch back and forth between the storage state and the leveled state.

## Description

### TECHNICAL FIELD

The present disclosure generally relates to the gimbal technology field and, more particularly, to a handheld gimbal.

### BACKGROUND

In related technologies, a gimbal, as a support apparatus for mounting and fixing a camera apparatus, provides users with stable and smooth image quality, which can meet needs of daily photographing and film production. At the current stage, most gimbals on the market have no restrictions on gimbal rotations when the gimbals do not work. As such, a gimbal rotates randomly during transportation and carrying, and the apparatus is easily bumped and damaged. Moreover, in a process of leveling the gimbal, an axis arm of the gimbal needs to be leveled. Since no restriction exists on the rotation of the axis arm when the gimbal does not work, the axis arm will rotate randomly during the adjustment of the axis arm, which increases the complexity of leveling the gimbal.

### SUMMARY

The present disclosure provides a handheld gimbal.

Embodiments of the present disclosure provide a handheld gimbal. The handheld gimbal includes:
a handle;
a first axis assembly, the first axis assembly including a first motor connected to an end of the handle and a first axis arm, the first axis arm being connected to a rotor of the first motor; and
a first lock assembly, the first lock assembly including a first lock member and a second lock member;
wherein:
   the handheld gimbal switches between a storage state and a leveled state;
   when the handheld gimbal is in the storage state or the leveled state, the first lock member is cooperatively connected to the second lock member to lock rotation of the first axis arm to cause the handheld gimbal to maintain in the storage state or the leveled state; and
   the first lock member is separated from the second lock member to unlock the rotation of the first axis arm to cause the handheld gimbal to switch between the storage state and the leveled state back and forth.

The handheld gimbal of the present disclosure may lock and unlock the rotation of the axis arm via the lock assembly to cause the handheld gimbal to maintain in the storage state or the leveled state. Thus, the axis arm may be prevented from rotating randomly when the handheld gimbal is in the storage state or the leveled state. Therefore, the handheld gimbal is more convenient to be carried and transported, and the complexity of leveling is reduced.

Embodiments of the present disclosure provide a handheld gimbal. The handheld gimbal includes at least one axis assembly. The handheld gimbal is configured to carry and adjust a carrier via the at least one axis assembly. The handheld gimbal further includes a lock assembly. The lock assembly is configured to lock the handheld gimbal in a leveled state. In the leveled state, the at least one axis assembly is adjusted to cause the carrier carried by the handheld gimbal to maintain balance.

The handheld gimbal of the present disclosure locks or unlocks the rotation of the axis arm via the lock assembly to cause the handheld gimbal to maintain in the storage state or the leveled state. Thus, the axis arm may be prevented from rotating randomly when the handheld gimbal is in the storage state or the leveled state. Therefore, the handheld gimbal is more convenient to be carried and transported, and the complexity of leveling is reduced.

Embodiments of the present disclosure provide a handheld gimbal. The handheld gimbal includes at least two axis assemblies. The handheld gimbal is configured to carry a carrier. The handheld gimbal further includes a lock assembly. The lock assembly is configured to lock the handheld gimbal in the storage state. When the handheld gimbal is in the storage state, the axis arms of the at least two axis assemblies overlap with each other.

The handheld gimbal of the present disclosure locks or unlocks the rotation of the axis arm via the lock assembly to cause the handheld gimbal to maintain in the storage state or the leveled state. Thus, the axis arm may be prevented from rotating randomly when the handheld gimbal is in the storage state or the leveled state. Therefore, the handheld gimbal is more convenient to be carried and transported, and the complexity of leveling is reduced.

Additional aspects and advantages of embodiments of the present disclosure will be partially described below, which will become apparent in the following description or known through implementation of embodiments of the present disclosure.

### BRIEF DESCRIPTION OF THE DRAWINGS

The above and/or additional aspects and advantages of the present disclosure will become obvious and easy to understand from the description of embodiments in connection with the following drawings, where:
FIG. 1 is a schematic structural diagram of a handheld gimbal in a leveled state according to some embodiments of the present disclosure;
FIG. 2 is another schematic structural diagram of the handheld gimbal in the leveled state according to some embodiments of the present disclosure;
FIG. 3 is another schematic structural diagram of the handheld gimbal in the leveled state according to some embodiments of the present disclosure;
FIG. 4 is another schematic structural diagram of the handheld gimbal in a storage state according to some embodiments of the present disclosure;
FIG. 5 is a schematic structural diagram showing a first lock member and a second lock member of the handheld gimbal according to some embodiments of the present disclosure;
FIG. 6 is a schematic exploded diagram showing the first lock member and the second lock member of the handheld gimbal according to some embodiments of the present disclosure;
FIG. 7 is a schematic enlarged diagram showing position I of the handheld gimbal in FIG. 6;
FIG. 8 is a schematic cross-sectional diagram showing a first operation member and a mounting base of the handheld gimbal according to some embodiments of the present disclosure;
FIG. 9 is another schematic cross-sectional diagram showing a first operation member and a mounting base of the handheld gimbal according to some embodiments of the present disclosure;
FIG. 10 is a schematic structural diagram showing a second lock assembly of the handheld gimbal according to some embodiments of the present disclosure;
FIG. 11 is an enlarged schematic diagram showing position II of the handheld gimbal in FIG. 10;
FIG. 12 is a schematic exploded diagram showing the second lock assembly of the handheld gimbal according to some embodiments of the present disclosure; and
FIG. 13 is an enlarged schematic diagram showing position III of the handheld gimbal in FIG. 12.

Reference numerals:
100 Handheld gimbal, 10 Handle, 20 First axis assembly, 21 First motor, 22 First axis arm, 23 First lock assembly, 231 First lock member, 2311 First snap part, 23111 First recess, 232 Second lock member, 2321 First slot, 233 First operation member, 2331 First protrusion, 2332 Third snap member, 2333 Fourth snap member, 24 Mounting base, 241 First snap member, 242 Second snap member, 25 First drive member, 30 Second axis assembly, 31 Second motor, 32 Second axis arm, 33 Second lock member, 331 Third lock member, 3311 Second snap part, 33111 Second recess, 33112 Third recess, 34 Fourth lock member, 341 Second slot, 35 Second operation member, 351 Second protrusion, 36 Second drive member, 37 First block sheet, 371 First convex column, 40 Third axis assembly, 41 Third motor, 42 Third axis arm, 43 Third lock member, 44 Carrier, and 50 Snap block.

### DETAILED DESCRIPTION OF THE EMBODIMENTS

Embodiments of the present disclosure are described in detail below. Examples of embodiments of the present disclosure are shown in the accompanying drawings. The same or similar reference numerals indicate the same or similar elements or elements with the same or similar functions. The following embodiments described with reference to the accompanying drawings are exemplary and only used to explain the present disclosure, and cannot be understood as a limitation to the present disclosure.

In the description of embodiments of the present disclosure, orientational or positional relationship indicated by terms such as "center," "longitudinal," "lateral," "length," "width," "thickness," "upper," "lower," "front," "back," "left," "right," "vertical," "horizontal," "top," "bottom," "inner," "outer," "clockwise," "counterclockwise" are based on the orientational or positional relationship shown in the drawings. The terms are only used to facilitate the description of embodiments of the present disclosure and simplify the description, rather than indicating or implying that the device or element referred to must have a specific orientation and be constructed and operated in a specific orientation. Therefore, the terms should not be understood as a limitation to the present disclosure. In addition, the terms "first" and "second" are only used for descriptive purposes and should not be understood as indicating or implying relative importance or implicitly indicating the number of indicated technical features. Thus, a feature associated with "first" or "second" may explicitly or implicitly include one or more of the feature. In the description of the present disclosure, "a plurality of' means two or more than two, unless otherwise specifically defined.

In the description of embodiments of the present disclosure, the terms "mount," "connection," and "coupling" should be understood in a broad sense. For example, the terms may indicate a fixed connection, a detachable connection, an integral connection, a mechanical connection, an electrical connection, a communication, a direct connection, an indirect connection through an intermediary, internal communication of two components, or interaction relationship of two components. Those of ordinary skill in the art should understand the specific meanings of the above terms in embodiments of the present disclosure according to specific situations.

The present disclosure provides many various implementations or examples to implement different structures of embodiments of the present disclosure. To simplify embodiments of the present disclosure, components and settings of specific examples are described below. The description is merely exemplary and does not intend to limit embodiments of the present disclosure. Reference numerals and/or letters are repeated in different examples in embodiments of the present disclosure for simplicity and clarity and do not indicate a relationship among various implementations and/or settings. Embodiments of the present disclosure provide examples of various specific processes and materials, but those of ordinary skill in the art may be aware of the application of other processes and/or use of other materials.

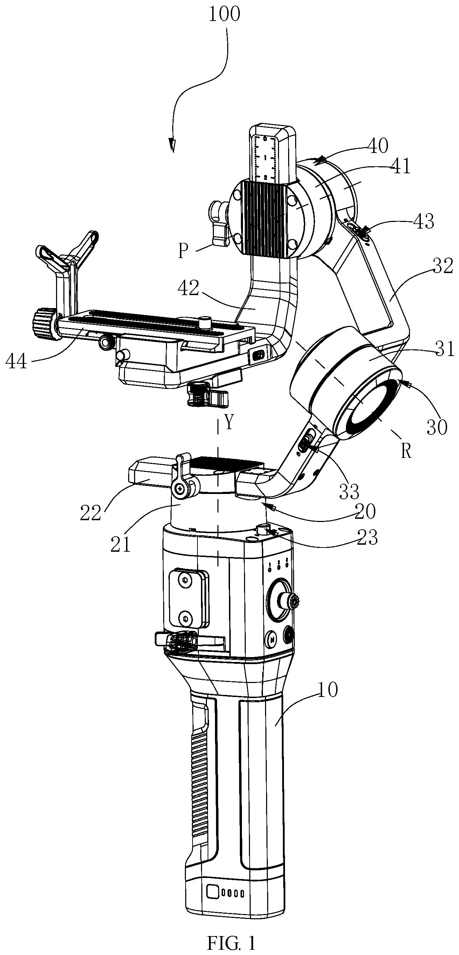

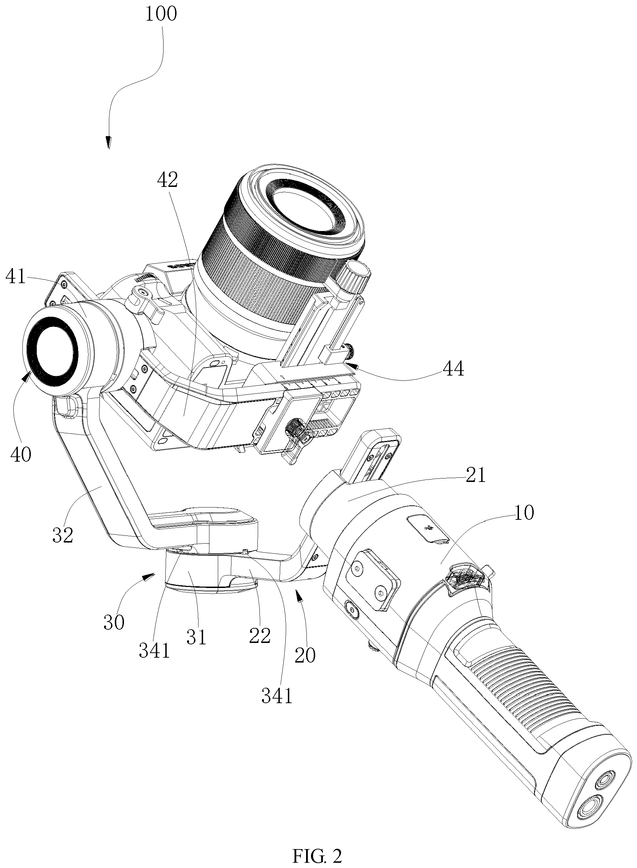

Referring to FIG. 1 to FIG. 4, embodiments of the present disclosure provide a handheld gimbal 100. The handheld gimbal 100 may be configured to carry a photographing device, such as a cellphone, a tablet, a camera, and a video recorder to fix the photographing device, adjust an attitude (for example, change a height, an inclined angle, and/or a direction of the photographing device) and stably maintain the photographing device at a certain attitude.

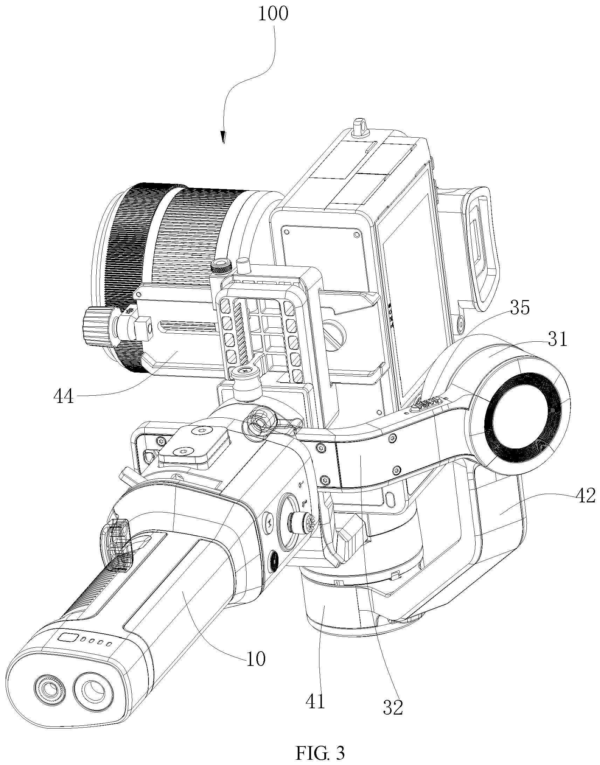

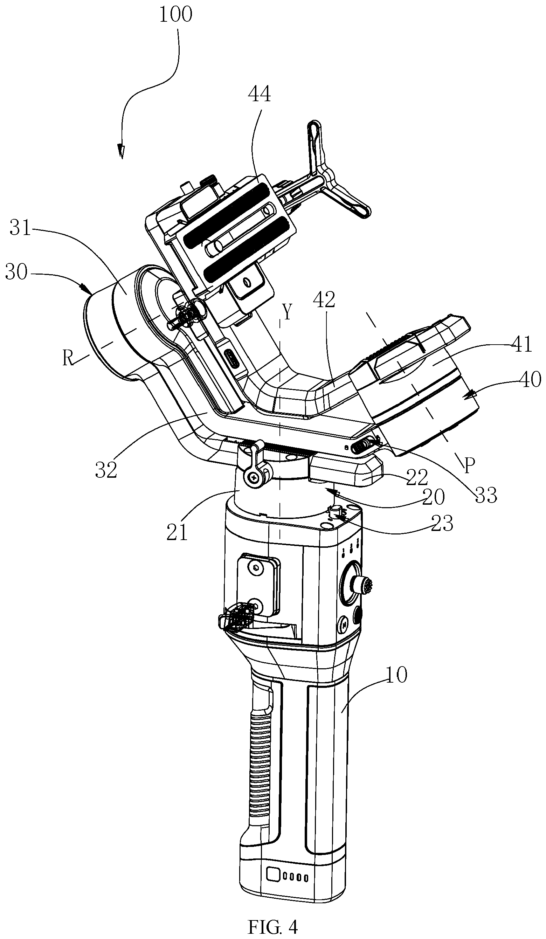

Specifically, the handheld gimbal 100 includes a handle 10, a first axis assembly 20, and a first lock assembly 23. The first axis assembly 20 includes a first motor 21 connected to an end of the handle 10 and a first axis arm 22. The first axis arm 22 is connected to a rotor of the first motor 21. The first lock assembly 23 includes a first lock member 231 and a second lock member 232. The handheld gimbal 100 may switch back and forth between a storage state and a leveled state. When the handheld gimbal 100 is in the storage state (as shown in FIG. 3) or the leveled state (as shown in FIG. 1), the first lock member 231 is cooperatively connected to the second lock member portion 232 to lock rotation of the first axis arm 22 (as shown in FIG. 4), thereby keeping the handheld gimbal 100 in the storage state or the leveled state. The first lock member 231 may be separated from the second lock member 232 to unlock the rotation of the first axis arm 22, so that the handheld gimbal 100 may be switched back and forth between the storage state and the leveled state.

The handheld gimbal 100 of the present disclosure may lock or unlock the rotation of the axis arm via the lock assembly to maintain the handheld gimbal 100 in the storage state or the leveled state, thereby preventing the axis arm from rotating randomly when the handheld gimbal 100 from is in the storage state or the leveled state. Thus, the handheld gimbal 100 is more convenient to be carried and transported, and the complexity of leveling is reduced.

In some embodiments, to facilitate holding, the handle 10 may also be provided with an anti-slip member to prevent the handheld gimbal 100 from slipping off from a user hand. The anti-slip member may be a friction member provided on the handle 10 or a groove portion or a protrusion portion for facilitating finger grip. It can be understood that a protection device such as a finger ring or a wrist strap that can be put on the user finger or wrist may be provided on the handle 10 to further protect the handheld gimbal 100 from slipping off from the user hand.

Specifically, the rotor of the first motor 21 is connected to the first axis arm 22. When the first motor 21 is operating, the rotor of the first motor 21 is driven to rotate to unlock rotation of the first axis arm 22 around the rotation axis Y of the first motor 21 when the first axis arm 22 rotates. The rotation of the first axis arm 22 may be locked or unlocked via the first lock assembly 23. Thus, the handheld gimbal 100 may be switched between the storage state and the leveled state.

Further, the rotor of the first motor 21 and the first axis arm 22 may be connected in a threaded connection manner. The threaded connection manner may facilitate the installation and disassembly of the first axis arm 22 from the rotor of the first motor 21, which improves the user experience. It can be understood that the rotor of the first motor 21 and the first axis arm 22 may not only be connected in the threaded connection manner. The connection manner between the first axis arm 22 and the rotor of the first motor 21 may be set according to different situations. For example, in other embodiments, the rotor of the first motor 21 and the first axis arm 22 may be connected in a snap connection or glue connection manner or in an integral structure manner. The specific connection manner of the rotor of the first motor 21 and the first axis arm 22 may not be limited here.

In the illustrated example, the first axis assembly 20 may be a yaw axis assembly. It can be understood that, in other embodiments, the first axis assembly 20 may be another axis assembly, such as a roll axis assembly or a pitch axis assembly. The first lock assembly 23 of the present disclosure may be applied to a single-axis gimbal and a multi-axis gimbal. The multi-axis gimbal includes a two-axis gimbal and a three-axis gimbal.

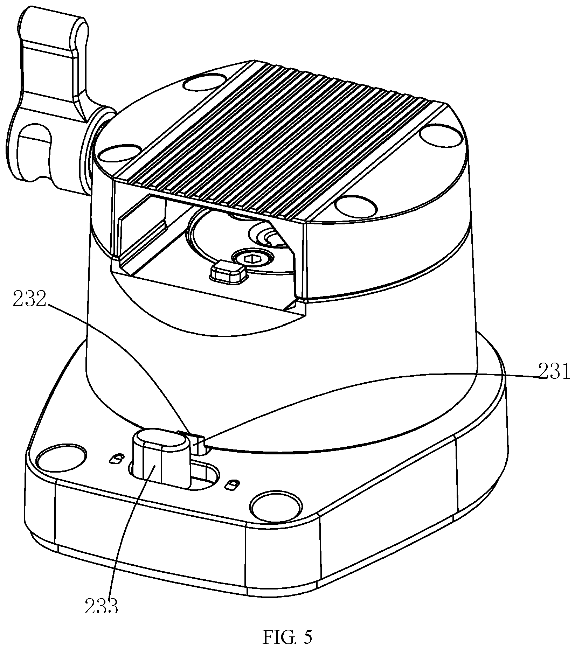

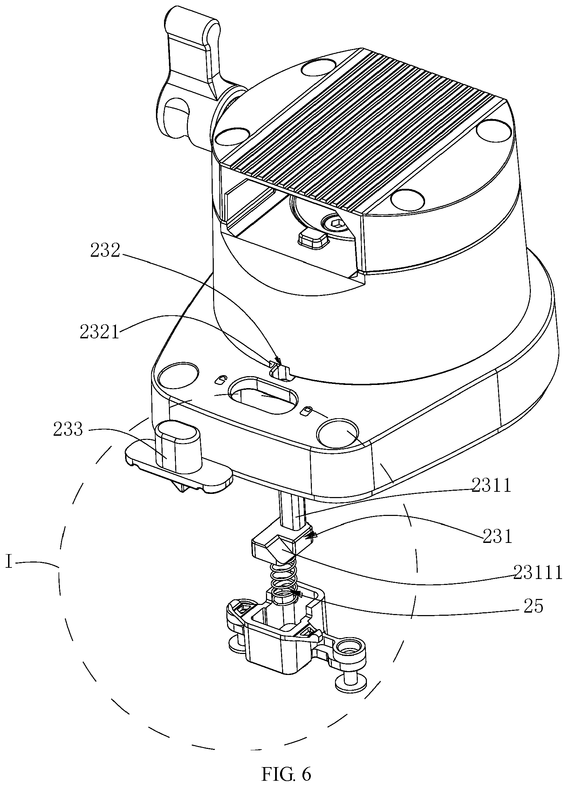

Referring to FIG. 5 to FIG. 7, in some embodiments, the first lock member 231 is provided with a movable first snap part 2311. The second lock member 232 is provided with a first slot 2321. Alternatively, the first lock member 231 is provided with a first slot 2321, and the second lock member 232 is provided with a movable first snap part 2311. The first snap part 2311 is snapped into the first slot 2321 to lock the rotation of the first axis arm 22. The first lock member 2311 is separated from the first slot 2321 to unlock the rotation of the first axis arm 22.

When the first snap part 2311 is snapped into the first slot 2321, the rotation of the first axis arm 22 may be in a locked state. At this time, the first axis arm 22 and the handle 10 may not rotate relative to each other. When the first snap part 2311 is separated from the first slot 2321, the rotation of the first axis arm 22 is in an unlocked state. At this time, the first axis arm 22 and the handle 10 may rotate relative to each other. That is, between the first axis arm 22 and the handle 10, the rotation of the first axis arm 22 may be locked and unlocked through the first snap part 2311 and the first slot 2321. The structure may be simple and easy to implement.

Further, in embodiments shown in the figures, the first lock member 231 is arranged at the handle 10. The second lock member 232 is arranged at the first axis arm 22. The first lock member 231 is provided with a movable first snap part 2311. The second lock member 232 is provided with a first slot 2321. When the first snap part 2311 of the first lock member 231 is separated from the first slot 2321 of the second lock member 232, no restriction exists between the first axis arm 22 and the handle 10. The first axis arm 22 may rotate relative to the handle 10. When the first snap part 2311 of the first lock member 231 is snapped into the first slot 2321 of the second lock member 232, since the first snap part 2311 is located in the first slot 2321, restriction may exist between the first axis arm 22 and the handle 10. Thus, the rotation of the first axis arm 22 may be locked. At this time, the first axis arm 22 cannot rotate relative to the handle 10. It can be understood that, in other embodiments, the first lock member 231 may be arranged at the first axis arm 22. The second lock member 232 may be arranged at the handle 10. In other embodiments, the first lock member 231 may be provided with the first slot 2321, and the second lock member 232 may be provided with a movable first snap part 2311.

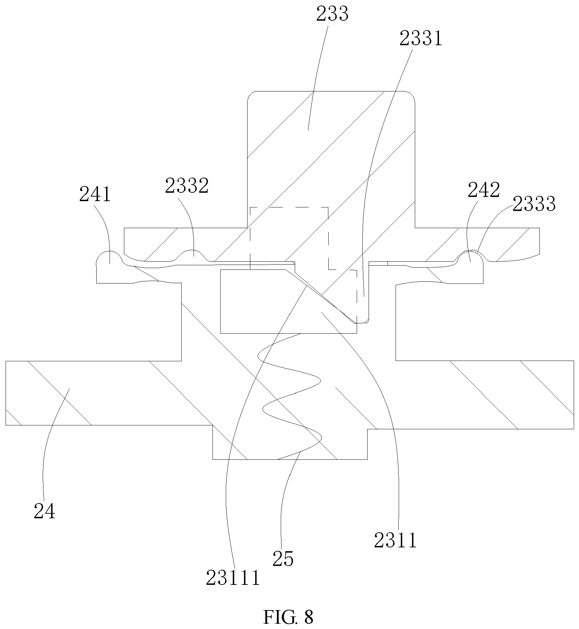

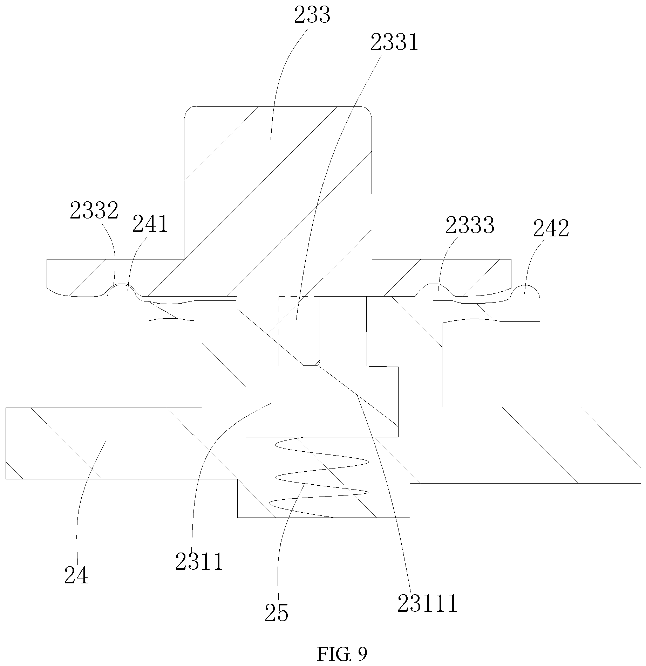

Referring further to FIG. 8 and FIG. 9, in some embodiments, the first lock assembly 23 includes a movable first operation member 233. The first operation member 233 is connected to the first snap part 2311. The first operation member 233 may be pushed to drive the first snap part 2311 to move so that the first snap part 2311 is snapped into the first slot 2321 or separated from the first slot 2321.

Since the first snap part 2311 is connected to the first operation member 233, the first operation member 233 may facilitate the user or another drive member to control the first snap part 2311 to be snapped into the first slot 2321 or separated from the first slot 2321.

Further, the first operation member 233 protrudes from an upper surface of the handle 10, which facilitates the user to use the first operation member 233.

For example, the first operation member 233 may be made of plastic. The ductility of the plastic may be high, which facilitates the production of the first operation member 233, and the price of the plastic may be relatively low. As such, the manufacturing cost of the first operation member 233 may be reduced, thereby facilitating mass production of the handheld gimbal 100.

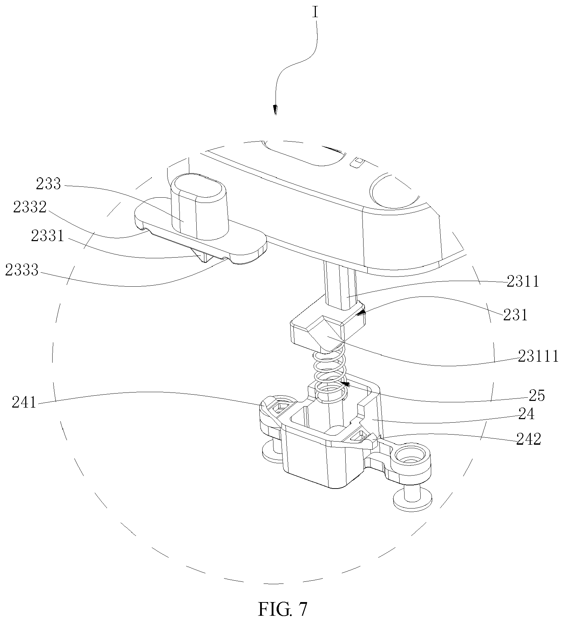

Referring to FIG. 7 to FIG. 9, in some embodiments, one of the first operation member 233 and the first snap part 2311 is provided with a first protrusion 2331. The other one of the first operation member 233 and the first snap part 2311 is provided with a first recess 23111. When the first protrusion 2331 is located in the first recess 23111, the first snap part 2311 is snapped into the first slot 2321. When the first protrusion 2331 is separated from the first recess 23111, the first snap part 2311 is separated from the first slot 2321.

As such, when the first protrusion 2331 is separated from the first recess 23111, the rotation of the first axis arm 22 is unlocked and may rotate relative to the handle 10. When the first protrusion 2331 is located in the first recess 23111, the rotation of the first axis arm 22 may be locked and cannot rotate relative to the handle 10. In the illustrated embodiment, the first operation member 233 is provided with the first protrusion 2331, and the first snap part 2311 may be provided with the first recess 23111. In other embodiments, the first snap part 2311 may be provided with the first protrusion 2331, and the first operation member 233 may be provided with the first recess 23111.

Further, the first recess 23111 may include a first inclined surface. The first protrusion 2331 may include a second inclined surface matching the first inclined surface. The first protrusion 2331 may be located in the first recess 23111. A surface of the first protrusion 2331 that faces the first inclined surface may be the second inclined surface. Thus, the first inclined surface may be fitted to the second inclined surface. The first inclined surface and the second inclined surface may facilitate the first protrusion 2331 to enter into or be separated from the first recess 23111 and cause the first protrusion 2331 to better cooperate with the first recess 23111, which is beneficial for the first lock assembly 23 to operate. Thus, the operation efficiency of the first lock assembly 23 may be improved.

Further referring to FIG. 7 to FIG. 9, in some embodiments, the first lock assembly 23 includes a mounting base 24. The first snap part 2311 may be at least partially located in the mounting base 24. A first snap member 241 and a second snap member 242 are provided on two sides of the mounting base 24, respectively. The first operation member 233 includes a third snap member 2332 and a fourth snap member 2333. The first protrusion 2331 or the first recess 23111 may be located between the third snap member 2332 and the fourth snap member 2333. When the first protrusion 2331 is located in the first recess 23111, the second snap member 242 is coupled to the fourth snap member 2333, and the first snap member 241 is separated from the third snap member 2332 (as shown in FIG. 8). When the first protrusion 2331 is separated from the first recess, the second snap member 242 is separated from the fourth snap member 2333, and the first snap member 241 is coupled to the third snap member 2332 (as shown in FIG. 9). In embodiments shown in the figures, the first operation member 233 includes the first protrusion 2331. The first protrusion 2331 is located between the third snap member 2332 and the fourth snap member 2333. It can be understood that, in other embodiments, the first operation member 233 may include the first recess 23111. The first recess 23111 may be located between the third snap member 2332 and the fourth snap member 2333.

The mounting base 24 may facilitate the installation of the first snap part 2311 and constrain the position of the first snap part 2311 to prevent a lateral deviation of the first snap part 2311. Since when the handheld gimbal 100 is used, the handheld gimbal 100 may shake, the first protrusion 2331 that is located in the first recess 23111 may be separated from the first recess 23111 accidentally, or the first protrusion 2331 that is separated from the first recess 23111 may enter into the first recess 23111 accidentally. Thus, when the first snap part 2311 needs to be snapped into the first slot 2321, the first snap part 2311 may be separated from the first slot 2321. When the first snap part 2311 needs to be separated from the first slot 2321, the first snap part 2311 may be snapped in the first slot 2321. As such, the use of the user may be affected, and the user experience may be reduced.

In the present disclosure, with the first snap member 241 and the third snap member 2332, when the first protrusion 2331 is separated from the first recess 23111, the first snap member 241 may be coupled to the third snap member 2332. As such, the positions of the first protrusion 2331 and the first recess 23111 may be limited through the first snap member 241 and the third snap member 2332 to prevent the first protrusion 2331 and the first recess 23111 from moving relative to each other accidentally. With the second snap member 242 and the fourth snap member 2333, when the first protrusion 2331 is located in the first recess 23111, the second snap member 242 may be coupled to the fourth snap member 2333. As such, the positions of the first protrusion 2331 and the first recess 23111 may be limited by the second snap member 242 and the fourth snap member 2333 to prevent the first protrusion 2331 and the first recess 23111 from moving relative to each other accidentally. As such, the above situation may be prevented, and the stability of the handheld gimbal 100 may be improved to further improve the user experience.

In embodiments shown in the figures, the first snap member 241 and the second snap member 242 include arch-shape pieces. The third snap member 2332 and the fourth snap member 2333 include recesses that match with the arc-shaped pieces. It can be understood that, in other embodiments, the third snap member 2332 and the fourth snap member 2333 may include the arc-shaped pieces, and the first snap member 241 and the second snap member 242 may include the recesses that match with the arc-shaped pieces. Alternatively, the third snap member 2332 and the second snap member 242 may include the arc-shaped pieces, and the first snap member 241 and the fourth snap member 2332 may include the recesses that match the arc-shaped pieces. Further alternatively, the first snap member 241 and the fourth snap member 2333 may include the arc-shaped pieces, and the third snap member 2332 and the second snap member 242 may include the recesses that match the arc-shaped pieces.

It can be understood that specific types of the first snap member 241, the second snap member 242, the third snap member 2332, and the fourth snap member 2333 may be set according to different situations. For example, the first snap member 241 may be a recess, the third snap member 2332 may be an arc-shaped piece, the second snap member 242 may be a recess, and the fourth snap member 2333 may be an arc-shaped piece. For another example, the first snap member 241 may be an arc-shaped piece, the third snap member 2332 may be a recess, the second snap member 242 may be a recess, and the fourth snap member 2333 may be an arc-shaped piece. That is, the specific types of the first snap member 241, the second snap member 242, the third snap member 2332, and the fourth snap member 2333 may be set according to different situations, as long as the first snap member 241 can be coupled to the third snap member 2332, and the second snap member 242 can be coupled to the fourth snap member 2333. The specific types of the first snap member 241, the second snap member 242, the third snap member 2332, and the fourth snap member 2333 are not limited here.

When the first snap member 241 is coupled to the third snap member 2332, or the second snap member 242 is coupled to the fourth snap member 2333, the arc-shaped piece is embedded in the recess. As such, when the first snap member 241 is coupled to the third snap member 2332, or the second snap member 242 is coupled to the fourth snap member 2333, the first snap member 241 and the third snap member 2332 or the second snap member 242 and the fourth snap member 2333 may be prevented from moving unexpectedly or being loosen. Thus, the stability between the first snap member 241 and the third snap member 2332 or the second snap member 242 and the fourth snap member 2333 may be improved. The arc-shaped piece and the recess matching the arc-shaped piece may be also convenient for the user to operate, which saves user efforts.

Referring to FIG. 8 and FIG. 9, in some embodiments, the first lock assembly 23 includes a first drive member 25. The first drive member 25 is configured to drive the first snap part 2311 to be snapped into the first slot 2321 and/or to be separated from the first slot 2321.

With the first drive member 25, the first snap part 2311 may be assisted to be snapped into the first slot 2321 and/or separated from the first slot 2321. As such, the lock and unlock between the first axis arm 22 and the handle 10 may be conveniently controlled. In the illustrated embodiment, the first drive member 25 may be configured to drive the first snap part 2311 to enter the first slot 2321

In embodiments of the present disclosure, the first drive member 25 may include an elastic member, such as a spring, which is located in the mounting base 24. An end of the spring may abut against a bottom surface of an accommodation hole of the mounting base 24. The other end of the spring may abut against the first snap part 2311. The first snap part 2311 may be controlled to move in a vertical direction through an elastic feature of the spring. As such, the first snap part 2311 may be snapped into the first slot 2321. In other embodiments, the first drive member 25 may also be configured to cause the first snap part 2311 to be separated from the first slot 2321. The first drive member 25 may also be configured to cause the first snap part 2311 to be snapped into and separated from the first slot 2321.

Further, the workflow of the first locking component 23 is as follows.

When the rotation of the first axis arm 22 needs to be unlocked, the first locking member 2311 needs to be separated from the first slot 2321. In this case, the first operation member 233 may be moved so that the first protrusion 2331 may be separated from the first recess 23111. At this time, the first operation member 233 may abut against the surface of the first snap part 2311 to cause the first snap part 2311 to move in a direction away from the first slot 2321. Thus, the first lock member 2311 may be separated from the first slot 2321, and the elastic member is in a compressed status at this time.

When the rotation of the first axis arm 22 needs to be locked, the first lock member 2311 needs to be snapped into the first slot 2321 at this time. In this case, the first operation member 233 may be moved to cause the first protrusion 2331 to enter the first recess 23111. At this time, the elastic member may drive the first protrusion 2331 to be snapped into the first slot 2321.

Referring to FIG. 1, FIG. 10, and FIG. 11, in some embodiments, the handheld gimbal 100 includes a second axis assembly 30 and a second lock assembly 33. The second axis assembly 30 includes a second motor 31 and a second axis arm 32 fixedly connected to the second motor 31. The first axis arm 22 is fixedly connected to the first motor 21 and the second motor 31. The second axis arm 32 is connected to the rotor of the second motor 31. The second lock assembly 33 includes the third lock member 331 and the fourth lock member 34. When the handheld gimbal 100 is in the storage state and the leveled state, the third lock member 331 and the fourth lock member 34 are cooperatively connected to lock the rotation of the second axis arm 32. Thus, the handheld gimbal 100 may maintain in the storage state. The third lock member 331 may be separated from the fourth lock member 34 to unlock the rotation of the second axis arm 32 so that the handheld gimbal 100 may be switched back and forth between the storage state and the leveled state. In this way, when the gimbal includes the second axis assembly 30, the second axis arm 32 may also be locked and unlocked.

In the illustrated embodiment, the second axis assembly 30 is a roll axis assembly. It can be understood that, in other embodiments, the second axis assembly 30 may be another axis assembly, for example, a pitch axis assembly. The second lock assembly 33 of the present disclosure may be applied to a single-axis gimbal and a multi-axis gimbal. The multi-axis gimbal may include a two-axis gimbal and a three-axis gimbal.

The second axis assembly 30 may enable the photographing device carried by the handheld gimbal 100 to change more attitudes (for example, change the height, the inclined angle, and/or the direction of the photographing device) to improve the user experience.

Further, the rotor of the second motor 31 may be connected to the second axis arm 32. The rotor of the second motor 31 may be driven to rotate when the second motor 31 is working. Thus, the second axis arm 32 may rotate around the rotation axis R of the second motor 31 when the second axis arm 32 rotates. With the second lock assembly 33, the rotation of the second axis arm 32 may be locked or unlocked, such that the handheld gimbal 100 may be switched back and forth between the storage state and the leveled state.

Further, the rotor of the second motor 31 and the second axis arm 32 may be connected in a threaded connection manner. The threaded connection manner may facilitate the installation and disassembly of the second axis arm 32 from the rotor of the second motor 31, which improves the user experience. It can be understood that the rotor of the second motor 31 and the second axis arm 32 may not only be connected in the threaded connection manner. The connection manner between the second axis arm 32 and the rotor of the second motor 31 may be set according to different situations. For example, in other embodiments, the rotor of the second motor 31 and the second axis arm 32 may be connected in a snap connection manner, a glue connection manner, or in an integral structure manner. The specific connection manner of the rotor of the second motor 31 and the second axis arm 32 may not be limited here.

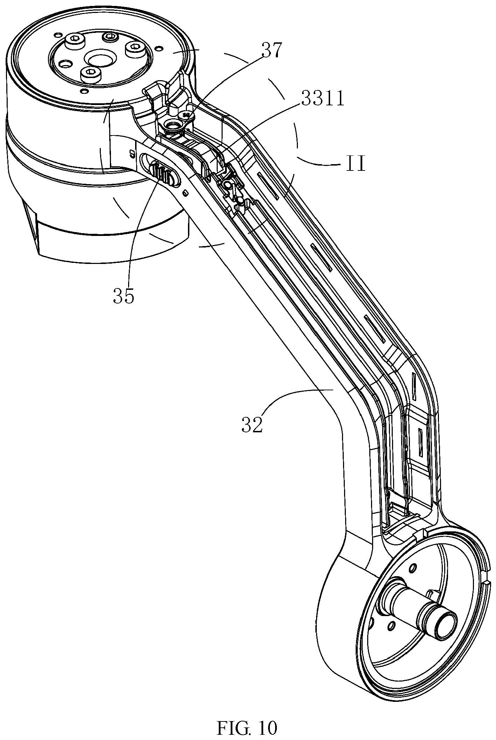

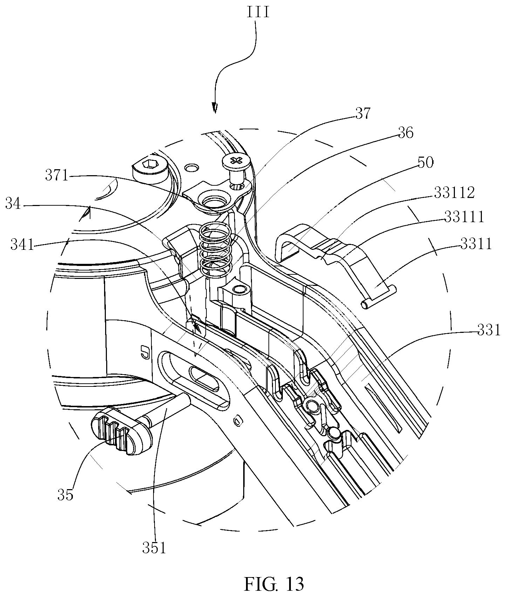

Referring to FIG. 10 and FIG. 13, in some embodiments, the third lock member 331 is provided with a movable second snap part 3311, and the fourth lock member 34 is provided with a second slot 341. Alternatively, the third lock member 331 is provided with a second slot 341, and the fourth lock member 34 is provided with a movable second snap part 3311. The second snap part 3311 is snapped into the second slot 341 to lock the rotation of the second axis arm 32. The second snap part 3311 may be separated from the second slot 341 to unlock the rotation of the second axis arm 32.

When the second snap part 3311 is snapped into the second slot 341, the rotation of the second axis arm 32 is in the locked state. At this time, the second axis arm 32 and the first axis arm 22 cannot rotate relative to each other. When the second snap part 3311 is separated from the second slot 341, the rotation of the second axis arm 32 is in the unlocked state. At this time, the second axis arm 32 and the first axis arm 22 may rotate relative to each other. That is, between the second axis arm 32 and the first axis arm 22, the lock and unlock of the rotation of the second axis arm 32 and the first axis arm 22 are controlled by the second snap part 3311 and the second slot 341. The structure is simple and easy to implement.

Further, in the example shown in the figure, the third lock member 331 is arranged at the second axis arm 32. The fourth lock member 34 is arranged at the first axis arm 22. The third lock member 331 is provided with a movable second snap part 3311. The fourth lock member 34 is provided with a second slot 341. When the second snap part 3311 of the third lock member 331 is separated from the second slot 341 of the fourth lock member 34 or the second snap part 3311 of the fourth lock member 34 is separated from the second snap part 3311 of the third lock member 331, no restriction exists between the first axis arm 22 and the second axis arm 32. Thus, the rotation of the second axis arm 32 is unlocked. At this time, the second axis arm 32 can rotate relative to the first axis arm 22. It can be understood that, in other embodiments, the third lock member 331 may be arranged at the first axis arm 22, and the fourth lock member 34 is arranged at the second axis arm 32. In other embodiments, the third lock member 331 is provided with the second slot 341, and the fourth lock member 34 is provided with the movable second snap part 3311.

In the illustrated embodiment, a number of the second slots 341 is two. The second slots 341 are arranged at an interval along a circumferential direction of the second motor 31. The positions of the two second slots 341 correspond to the leveled state or the storage state of the handheld gimbal 100, respectively. When the second snap part 3311 is snapped into one of the second slots 341 and separated from the other one of the second slots 341, the second lock assembly 33 may lock the rotation of the second axis arm 32. The handheld gimbal 100 may be locked in the leveled state or the storage state. When the second snap part 3311 is separated from the two second slots 341, the second lock assembly 33 may unlock the rotation of the second axis arm 32. The handheld gimbal 100 may switch between the leveled state and the storage state. As such, with the two second slots 341, the handheld gimbal 100 may be further stabilized in both the leveled state and the storage state.

Referring to FIG. 10 to FIG. 13, in some embodiments, the second lock assembly 33 includes a movable second operation member 35. The second operation member 35 is connected to the second snap part 3311. The second operation member 35 may be pushed to drive the second snap part 3311 to move to cause the second snap part 3311 be snapped into the second slot 341 and/or separated from the second slot 341.

Since the second snap part 3311 is connected to the second operation member 35. The second operation member 35 may facilitate the user or another drive member to control the second snap part 3311 to be snapped into the second slot 341 and/or separated from the second slot 341.

Further, the second operation member 35 may protrude from the surface of the first axis arm 22, which facilitates the user to use the second operation member 35.

Furthermore, the second operation member 35 may be made of plastic. The ductility of the plastic may be high, which facilitates the production of the second operation member 35, and the price of the plastic may be relatively low. As such, the manufacturing cost of the second operation member 35 may be reduced, thereby facilitating mass production of the handheld gimbal 100.

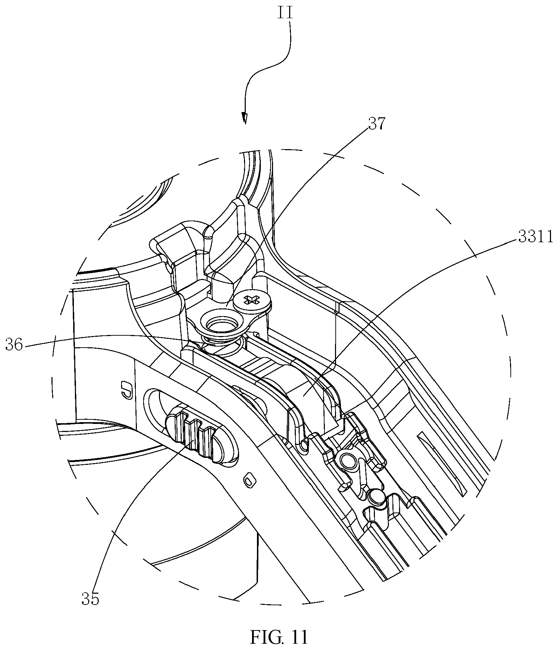

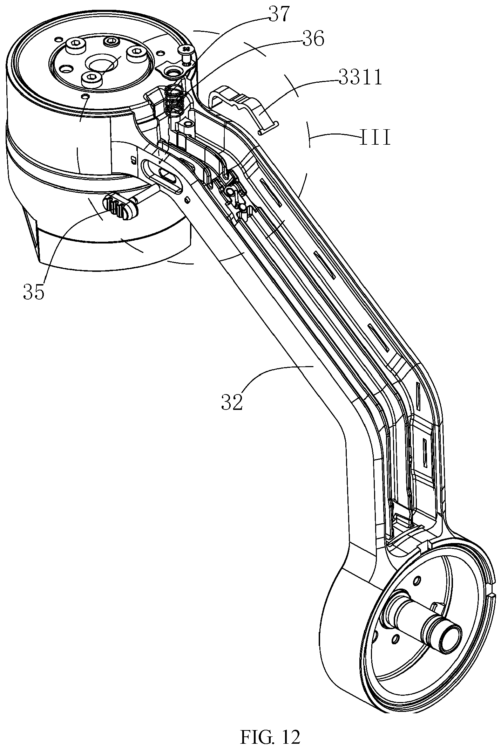

Referring to FIG. 11 and FIG. 12, in some embodiments, the second operation member 35 is provided with a second protrusion 351. The second snap part 3311 is provided with a second recess 33111 and a third recess 33112 at an interval. In the illustrated example, when the second protrusion 351 is located in the second recess 33111, the second snap part 3311 is snapped in the second slot 341. When the second protrusion 351 is located in the third recess 33112, the second snap part 3311 is separated from the second slot 341. In other embodiments, when the second protrusion 351 is located in the second recess 33111, the second snap part 3311 may be separated from the second slot 341. When the second protrusion 351 is located in the third recess 33112, the second snap part 3311 may be snapped in the second slot 341.

The second snap part 3311 is an elastic sheet. An end of the elastic sheet is fixed by a screw. The elastic sheet may be roughly in an arc-shape. The second protrusion 351 is located under the elastic sheet and is in contact with the elastic sheet. The second recess 33111 and the third recess 33112 are located on a side of the elastic sheet facing the second protrusion 351. A snap block 50 is formed at an end of the elastic sheet close to the second slot 341. A distance from the second recess 33111 to the second slot 341 may be greater than a distance from the third recess 33112 to the second slot 341. That is, the second recess 33111 may be farther from the second slot 341, and the third recess 33112 may be closer to the second slot 341. When the second protrusion 351 is located in the second recess 33111, the snap block 50 is snapped in the second slot 341. Since the elastic sheet has elasticity and the third recess 33112 is closer to the second slot 341, when the second projection 351 is located in the third recess 33112, the second protrusion 351 may lift the end of the elastic sheet near the second slot 341 so that the snap block 50 is separated from the second slot 341.

Referring to FIG. 10 and FIG. 11, in some embodiments, the second lock assembly 33 includes a second drive member 36. The second drive member 36 is configured to drive the second snap part 3311 to be snapped into the second slot 341 and/or separated from the second slot 341.

With the second drive member 36, the second snap part 3311 may be assisted to be snapped into the second slot 341 and/or separated from the second slot 341, which facilitates controlling the unlocking and the locking between the second axis arm 32 and the first axis arm 22.

In the embodiment, the second drive member 36 may include an elastic member, such as a spring. One end of the spring may abut against a bottom surface of the second axis arm 32. The other end of the spring may abut against the second snap part 3311. The spring may assist the second snap part 3311 to be snapped into the second slot 341 and/or separated from the second slot 341.

Further, since the elastic sheet may have certain elasticity, when the second protrusion is located in the third recess 33112, the second protrusion may lift the snap block 50 of the second lock member 3311 to be snapped into the second slot. When the second protrusion is located in the second recess 33111, since the elastic sheet needs to be restored to an original status, at this time, the snap block 50 of the second snap part 3311 will return to the second slot 341. Then, the elasticity of the elastic sheet is limited. As time goes by, the elastic sheet may also deform to a certain degree, which may cause the second snap part 3311 not to enter the second slot 341. By configuring the second drive member 36 as the spring, when the second protrusion is in the third three recesses 33112, the second protrusion may lift the snap block 50 of the second snap part 3311 to be snapped into the second slot 341. At this time, the second snap part 3311 may force the spring to be compressed. When the second protrusion is located in the second recess 33111, since the elastic sheet needs to restore to the original status, the elastic sheet may move downward. At this time, since the spring also needs to restore to an original status, the restoration of the spring will give the elastic sheet a downward force, thereby enabling the elastic sheet to be able to restore to the original status. At this time, the second snap part 3311 may be snapped into the second slot 341.

Referring to FIG. 10 to 13, in some embodiments, the second lock assembly 33 includes a first block sheet 37. The first block sheet 37 is arranged in the second axis arm 32. The second drive member 36 includes a first elastic member. The first elastic member is clamped between the first block sheet 37 and the second snap part 3311.

The second drive member 36 includes the first elastic member. The first elastic member is clamped between the first block sheet 37 and the second snap part 3311. Such an arrangement may limit the position of the first elastic member. That is, at this time, the first elastic member may only work between the first block sheet 37 and the second snap part 3311, which may prevent the first elastic member from falling or loosening.

In the embodiment, the first block sheet 37 may be fixed in the second axis arm 32 by a screw. As such, the movement of the first block sheet 37 may be restricted, thereby preventing a situation when the first elastic member deforms, the first block sheet 37 may be driven to move to cause that the first elastic member cannot drive the second snap part 3311 to be snapped into the second slot 341 and/or separated from the second slot 341.

Further, a first convex column 371 is arranged at the surface of the first block sheet 371. One end of the first elastic member is sleeved at the first convex column 371.

The first elastic member is sleeved at the first protruding post 371 of the first block sheet 37. As such, with the convex column, the lateral movement of the first elastic member may be limited, thereby preventing the first elastic member from being separated from the first block sheet 37 during the operation.

Further, the workflow of the second lock assembly 33 is as follows.

When the rotation of the second axis arm 32 needs to be unlocked, the second snap part 3311 may need to be separated from the first slot 2321. In this case, the second operation member 35 may be moved to cause the second protrusion 351 to be located in the third recess 33112. At this time, the snap block 50 of the second snap part 3311 will be lifted up to be separated from the second slot 341. Thus, the second axis arm 32 may rotate relative to the first axis arm 22.

When the rotation of the second axis arm 32 needs to be locked, the second snap part 3311 may need to be snapped into the second slot 341. In this case, the second operation member 35 may be moved to cause the second protrusion 351 to be located in the second recess 33111. At this time, under the action of the second drive member 36, the snap block 50 of the second snap part 3311 may be driven to be snapped into the second slot 341. Thus, the second axis arm 32 cannot rotate relative to the first axis arm 22.

Referring to FIG. 1 to FIG. 4, in some embodiments, the handheld gimbal 100 includes a third axis assembly 40, a third lock assembly 43, and a carrier 44. The third axis assembly 40 includes a third motor 41 and a third axis arm 42 fixedly connected to the third motor 41. The second axis arm 32 is fixedly connected to the second motor 31 and the third motor 41. One end of the third shaft arm 42 is connected to the rotor of the third motor 41. The other end is connected to the carrier 44. The third lock assembly 43 includes a fifth lock member and a sixth lock member. When the handheld gimbal 100 is in the storage state or the leveled state, the fifth locking member and the sixth locking member may be cooperatively connected to lock the rotation of the third axis arm 42 so that the handheld gimbal 100 may maintain in the storage state or the leveled state. The fifth lock member may be separated from the sixth lock member to unlock the rotation of the third axis arm 42 so that the handheld gimbal 100 may switch back and forth between the storage state and the leveled state.

As such, the third axis assembly 40 may further cause the photographing device carried by the handheld gimbal 100 to change more attitudes (for example, change the height, the inclined angle, and/or the direction of the photographing device) and improve the user experience.

Specifically, the rotor of the third motor 41 is connected to the third axis arm 42. When the third motor 41 is working, the rotor of the third motor 41 is driven to rotate to realize the rotation of the third axis arm 42 around rotation axis P of the third motor 41 when the rotation of the third axis arm 42 is unlocked. The third lock assembly 43 may lock or unlock the rotation of the third axis arm 42, thereby causing the handheld gimbal 100 to switch back and forth between the storage state and the leveled state.

Further, the carrier 44 may fix the photographing device and prevent the photographing device from loosening.

Specifically, the carrier 44 may carry an imaging lens. Optionally, the carrier 44 may further include a carrier member for fixing the photographing device. The photographing device may be a camera, a smart terminal with a photographing function (such as a cellphone, a tablet, etc.), or another device with the photographing function. The carrier 44 may fix the load in a clamping and/or magnetic attraction manner.

An overall structure of the third lock assembly 43 may be basically similar to the structure of the second lock assembly 33. To avoid redundancy, for the expansion of the specific implementation of the third lock assembly 43 in following embodiments, reference may be made to the description of the second lock assembly 33, which is not expanded in detail in subsequent embodiments.

In some embodiments, the fifth lock member may be provided with a movable third snap member, and the sixth lock member may be provided with a third slot, or the fifth lock member may be provided with the third slot, and the sixth lock member may be provided with the movable third snap member. The third snap member may be snapped into the third slot to lock the rotation of the third axis arm 42, and the third snap member may be separated from the third slot to unlock the rotation of the third axis arm 42.

In some embodiments, the third lock assembly 43 includes a movable third operation member. The third operation member may be connected to the third snap member. The third operation member may drive the third snap member to move when being pushed to operate. Thus, the third snap member may be entered in the third slot and/or separated from the third card slot.

In some embodiments, the third operation member may be provided with a third protrusion. The third snap member may be provided with a fourth recess and a fifth recess at an interval. When the third protrusion is located in the fourth recess, the third snap member may be snapped in the third slot. When the third protrusion is located in the fifth recess, the third snap member may be separated from the third slot.

In some embodiments, the third lock assembly 43 may include a third drive member. The third drive member may be configured to drive the third snap member to be snapped into the third slot and/or separated from the third slot.

In some embodiments, the third lock assembly 43 may include a second block sheet. The second block sheet may be mounted in the third axis arm 42. The third drive member may include a second elastic member. The second elastic member may be clamped between the second block sheet and the third snap member.

In some embodiments, the surface of the second block sheet may be provided with a second convex column. One end of the second elastic member may be sleeved on the second convex column.

Further, in the embodiment, the third lock assembly 43 and the second lock assembly 33 may have the same function and structure. That is, the structure and working manner of the third lock assembly 43 may be same as the structure and working manner of the second lock assembly 33. For example, the second snap part 3311 and the second slot 341 of the second lock assembly 33 may correspond to the third snap member and the third slot of the third lock assembly 43, respectively. For another example, the third lock member 331 and the fourth lock member 34 of the second lock assembly 33 may correspond to the fifth lock member and the sixth lock member of the third lock assembly 43, respectively. For another example, the first block sheet 37 and the second drive member 36 of the second lock assembly 33 may correspond to the second block sheet and the third drive member of the third lock assembly 43, respectively. The specific function and working manner of the third lock assembly 43 are not listed here.

In the embodiment, a difference between the second lock assembly 33 and the third lock assembly 43 is that the second lock assembly 33 may be configured to lock or unlock the relative rotation between the second axis arm 32 and the first axis arm 22. The third lock assembly 43 may be configured to lock or unlock the relative rotation between the third axis arm 42 and the second axis arm 32.

In some embodiments, the first drive member 25, the second drive member 36, and the third drive member may include one of the following structures an elastic member, a motor, a magnetic member, and an electromagnetic member.

The above four structures may all realize the drive capabilities of the first drive member 25, the second drive member 36, and the third drive member.

It can be understood that the first drive member 25, the second drive member 36, and the third drive member may not only include the above four structures. The specific structures of the first drive member 25, the second drive member 36, and the third drive member may be set according to different situations. The specific structures of the first drive member 25, the second drive member 36, and the third drive member may not be limited here. The electromagnetic member may include a coil and a solenoid valve.

In some embodiments, the leveled state may be used to cause the carrier 44 carried on the handheld gimbal 100 to keep balance by adjusting at least one of the first axis assembly 20, the second axis assembly 30, or the third axis assembly 40. Adjusting at least one of the first axis assembly 20, the second axis assembly 30, or the third axis assembly 40 may include adjusting the first axis assembly 20 or the second axis assembly 30 or the third axis assembly 40, adjusting the first axis assembly 20 and the second axis assembly 30, adjusting the second axis assembly 30 and the third axis assembly 40, adjusting the first axis assembly 20 and the third axis assembly 40, and adjusting the first axis assembly 20, the second axis assembly 30, and the third axis assembly 40. The specific operation may be selected according to the actual situation, which is not specifically limited here.

Specifically, when the first axis assembly 20, the second axis assembly 30 and the third axis assembly 40 are not locked, the first axis assembly 20, the second axis assembly 30 and the third axis assembly 40 may all rotate relatively. For example, the first axis arm 22 may rotate around rotation axis Y of the first motor 21, the second axis arm 32 may rotate around rotation axis R of the second motor 31, and the third axis arm 42 may rotate around rotation axis P of the third motor 41. That is, at this time, the carrier 44 may also rotate around rotation axis Y, rotation axis R, and rotation axis P. As such, the carrier 44 may belong to an unbalanced status.

Causing the carrier to keep balance may refer to adjusting at least one of the first axis assembly 20, the second axis assembly 30, and the third axis assembly 40 to lock at least one of the first axis assembly 20, the second axis assembly 30, or the third axis assembly. For example, the first axis assembly 20 may be locked. At this time, the first axis arm 22 may not rotate around rotation axis Y of the first motor 21, the second axis arm 32 may rotate around rotation axis R of the second motor 31, and the third axis arm 42 may rotate around rotation axis P of the third motor 41. As such, the carrier 44 may not rotate around rotation axis Y, but rotate around rotation axis R and rotation axis P. That is, the rotation of the carrier 44 around rotation axis Y may be limited. At this time, the carrier 44 may be in a balanced status in a direction around rotation axis Y. For another example, the first axis assembly 20 and the second axis assembly 30 may be locked. At this time, the first axis arm 22 may not rotate around rotation axis Y of the first motor 21, and the second axis arm 32 may not rotate around rotation axis R of the second motor 31, and the third axis arm 42 may rotate around rotation axis P of the third motor 41. As such, the carrier 44 may not rotate around rotation axis Y and rotation axis R, but rotate around rotation axis P. That is, the rotations of the carrier 44 around rotation axis Y and rotation axis R may be limited. At this time, carrier 44 may be in a balanced status in directions around rotation axis Y and rotation axis R. For another example, the first axis assembly 20, the second axis assembly 30, and the third axis assembly 40 may be all locked. At this time, the first axis arm 22 may not rotate around rotation axis Y of the first motor 21, and the second axis arm 32 may not rotate around rotation axis R of the second motor 31, and the third axis arm 42 may not rotate around rotation axis P of the third motor 41. As such, the carrier 44 may not rotate around rotation axis Y, rotation axis R, and rotation axis P. That is, the carrier 44 may be in a balanced status in directions around rotation axis Y, rotation axis R, and rotation axis P. Of course, the above are only examples to illustrate the specific meaning of keeping balance of the carrier 44. Whether the carrier 44 is in the balanced status around one, two, or three directions of rotation axis Y, rotation axis R, and rotation axis P may be selected according to actual operation, which is not limited here.

Further, in the illustrated embodiment, the handheld gimbal 100 includes the first axis arm 22, the second axis arm 32, and the third axis arm 42. When the handheld gimbal 100 is switched to the storage state, the carrier 44 may be located between the third motor 41 and the second motor 31. The first axis arm 22, the second axis arm 32, and the third axis arm 42 may overlap with each other.

Such an arrangement may facilitate the storage of the handheld gimbal 100, thereby making the handheld gimbal 100 easy to carry, which satisfies the consumer requirements for portability. The carrier 44 being located between the third motor 41 and the second motor 31 can be understood in a vertical direction. The position where the carrier is connected to the third axis arm 42 may be located between the third motor 41 and the second motor 31.

Embodiments of the present disclosure further provide a handheld gimbal 100. The handheld gimbal 100 may include at least one axis assembly. The handheld gimbal 100 may be configured to carry and adjust the carrier 44 through the at least one axis assembly. The axis assembly may further include a lock assembly. The lock assembly may be configured to lock the handheld gimbal 100 in a leveled state. The leveled state may be used to cause the carrier 44 carried at the handheld gimbal 100 to keep balance by adjusting the at least one axis assembly.

Such an arrangement may enable the handheld gimbal 100 to keep balance of the carrier 44 in the leveled state, thereby facilitating the use of the handheld gimbal 100.

In some embodiments, the handheld gimbal 100 may include three axis assemblies. When the handheld gimbal is in the leveled state, the axis arms of the three axis assemblies may be staggered.

The three axis assemblies may enable the handheld gimbal 100 to cause the carried photographing device to change more attitudes (for example, to change the height, the inclined angle, and/or the direction of the photographing device), which may improve the user experience.

Specifically, in the illustrated embodiment, the three axis assemblies may include the first axis component 20, the second axis component 30, and the third axis component 40, respectively. The axis arms of the three axis assemblies may be staggered, which means that the first axis arm 22, the second axis arm 32, and the third axis arm 42 may be staggered from each other. The axis arms of the three axis assemblies being staggered can be understood that, in a two-dimensional plane selected in the three-dimensional space, areas where orthographic projections of the three axis arms on the two-dimensional plane do not overlap may be larger than overlapped areas.

Furthermore, the handheld gimbal 100 may include at least two axis assemblies. The handheld gimbal 100 may be configured to carry the carrier 44. The axis assembly may further include a lock assembly. The lock assembly may be configured to lock the handheld gimbal 100 in the storage state. When the handheld gimbal 100 is in the storage state, the axis arms of at least two axis assemblies may overlap with each other.

The axis assembly and the lock assembly may facilitate the rotation and fixation of the axis assembly of the handheld gimbal 100. When the handheld gimbal 100 is in the storage state, the axis arms of the at least one axis assembly may overlap each other. Such an arrangement may facilitate the storage of the handheld gimbal 100. Thus, the handheld gimbal 100 may be easy to carry, which satisfies the consumer requirements for portability.

Specifically, the at least two axis assemblies may include the first axis assembly 20 and the second axis assembly 30, may also include the first axis assembly 20 and a third axis assembly 40, or may include the second axis assembly 30 and the third axis assembly 40, or may also include the first shaft assembly 20, the second shaft assembly 30, and the third shaft assembly 40. In the case of including two axis assemblies, the lock assembly may include two first lock assemblies 23, two second lock assemblies 33, or two third lock assemblies 43, may also include the first lock assembly 23 and the second lock assembly 33, may also include the first lock assembly 23 and the third lock assembly 43, or may also include the second lock assembly 33 and the third lock assembly 43.

In the illustrated embodiment, the handheld gimbal 100 may include three axis assemblies. When the handheld gimbal 100 is in the storage state, the axis arms of the three axis assemblies may overlap with each other.

The three axis assemblies may enable the mounted photographing device carried by the handheld gimbal 100 to change more attitudes (for example, to change the height, the inclined angle, and/or the direction of the photographing device), which may improve the user experience.

Specifically, in the illustrated embodiment, the three axis assemblies may include the first axis assembly 20, the second axis assembly 30, and the third axis assembly 40, respectively. The axis arms of the three axis assemblies overlapping with each other means that the first axis arm 22, the second axis arm 32, and the third axis arm 42 may overlap with each other. The axis arms of the three axis assemblies overlapping with each other may be understood that a two-dimensional plane may be selected in the three-dimensional space and the two-dimensional plane is perpendicular to the rotation axis of the motor of the axis assembly, for example, perpendicular to rotation axis Y of the first motor 21. The orthographic projections of the three axis arms on the two-dimensional plane may basically overlap with each other, or an overlap ratio may be greater than a non-overlap ratio.

In the description of this specification, referring to the terms "certain embodiments," "one embodiment," "some embodiments," "exemplary embodiments," "examples," "specific examples," or "some examples," the description means that specific features, structures, materials, or characteristics described in connection with embodiments or examples are included in at least one embodiment or example of the present disclosure. In this specification, the schematic description of the above terms does not necessarily refer to a same embodiment or example. The described specific features, structures, materials, or characteristics may be combined in any suitable manner in any one or more embodiments or examples.

Although embodiments of the present disclosure are shown and described above, above-described embodiments are exemplary and should not be considered as a limitation to the present disclosure. Those of ordinary skill in the art can perform change, modification, replacement, and transformation on above-described embodiments.

## Claims

1. A handheld gimbal comprising:
a handle;
a first axis assembly, the first axis assembly including a first motor connected to an end of the handle and a first axis arm, the first axis arm being connected to a rotor of the first motor; and
a first lock assembly, the first lock assembly including a first lock member and a second lock member;
wherein:
the handheld gimbal switches between a storage state and a leveled state;
when the handheld gimbal is in the storage state or the leveled state, the first lock member is cooperatively connected to the second lock member to lock rotation of the first axis arm to cause the handheld gimbal to maintain in the storage state or the leveled state; and
the first lock member is separated from the second lock member to unlock the rotation of the first axis arm to cause the handheld gimbal to switch between the storage state and the leveled state back and forth.

2. The handheld gimbal of claim 1, wherein:
the first lock member is provided with a movable first snap part, and the second lock member is provided with a first slot; or the first lock member is provided with the first slot, and the second lock member is provided with the movable first snap member; and
the first snap part is snapped into the first slot to lock the rotation of the first axis arm, and the first snap part is separated from the first slot to unlock the rotation of the first axis arm.

3. The handheld gimbal of claim 2, wherein the first lock assembly includes a movable first operation member, the first operation member is connected to the first snap part, the first operation member is pushed to operate to drive the first snap part to move to cause the first snap part to be snapped into the first slot or separated from the first slot.

4. The handheld gimbal of claim 3, wherein one of the first operation member and the first snap part is provided with a first protrusion, the other one of the first operation member and the first snap part is provided with a first recess, when the first protrusion is located in the first recess, the first snap part is snapped in the first slot, and when the first protrusion is separated from the first recess, the first snap part is separated from the first slot.

5. The handheld gimbal of claim 4, wherein:
the first lock assembly includes a mounting base, the first snap part at least being partially located in the mounting base, a first snap member and a second snap member being arranged at two sides of the mounting base, respectively, a third snap member and a fourth snap member being arranged at the first operation member, the first protrusion or the first recess being located between the third snap member and the fourth snap member;
when the first protrusion is located in the first recess, the second snap member is coupled to the fourth snap member, and the first snap member is separated from the third snap member; and
when the first protrusion is separated from the first recess, the second snap member is separated from the fourth snap member, and the first snap member is coupled to the third snap member.

6. The handheld gimbal of claim 2, wherein the first lock assembly includes a first drive member, the first drive member being configured to drive first snap part to be snapped in the first slot and/or separated from the first slot.

7. The handheld gimbal of claim 1, further comprising a second axis assembly and a second lock assembly, the second axis assembly including a second motor and a second axis arm fixedly connected to the second motor, the first axis arm being fixedly connected to the first motor and the second motor, and the second axis arm being connected to a rotor of the second motor, wherein:
the second lock assembly includes a third lock member and a fourth lock member;
when the handheld gimbal is in the storage state or the leveled state, the third lock member and the fourth lock member are connected cooperatively to lock rotation of the second axis arm to cause the handheld gimbal to maintain in the storage state or the leveled state; and
the third lock member is separated from the fourth lock member to unlock the rotation of the second axis arm to cause the handheld gimbal to switch back and forth between the storage state and the leveled state.

8. The handheld gimbal of claim 7, wherein:
the third lock member is provided with a movable second snap part, and the fourth lock member is provided with a second slot; or the third lock member is provided with the second slot, and the fourth lock member is provided with the movable second snap part; and
the second snap part is snapped in the second slot to lock the rotation of the second axis arm, and the second snap part is separated from the second slot to unlock the rotation of the second axis arm.

9. The handheld gimbal of claim 8, wherein the second lock assembly includes a movable second operation member, the second operation member being connected to the second snap part, the second operation member being pushed to operate to drive the second snap part to move to cause the second snap part to be snapped in the second slot or separated from the second slot.

10. The handheld gimbal of claim 9, wherein the second operation member is provided with a second protrusion, the second snap part being provided with a second recess and a third recess at an interval, when the second protrusion is located in the second recess, the second snap part being snapped in the second slot, when the second protrusion is located in the third recess, the second snap part being separated from the second slot.

11. The handheld gimbal of claim 8, wherein the second lock assembly includes a second drive member, the second drive member being configured to drive the second snap part to be snapped in the second slot and/or separated from the second slot.

12. The handheld gimbal of claim 11, wherein the second lock assembly includes a first block sheet, the first block sheet being mounted in the second axis arm, and the second drive member includes a first elastic member, the first elastic member being clamped between the first block sheet and the second snap part.

13. The handheld gimbal of claim 12, wherein a surface of the first block sheet is provided with a first convex column, an end of the first elastic member being sleeved at the first convex column.

14. The handheld gimbal of claim 7, further comprising a third axis assembly, a third lock assembly, and a carrier, the third axis assembly including a third motor and a third axis arm fixedly connected to the third motor, the second axis arm being fixedly connected to the second motor and the third motor, an end of the third axis arm being connected to a rotor of the third motor, and the other end being connected to the carrier, wherein:
the third lock assembly includes a fifth lock member and a sixth lock member;
when the handheld gimbal is in the storage state or the leveled state, the fifth lock member and the sixth lock member being cooperatively connected to lock rotation of the third axis arm to cause the handheld gimbal to maintain in the storage state or the leveled state; and
the fifth lock member is separated from the sixth lock member to unlock the rotation of the third axis arm to cause the handheld gimbal to switch back and forth between the storage state and the leveled state.

15. The handheld gimbal of claim 14, wherein:
the fifth lock member is provided with a movable third snap part, and the sixth lock member is provided with a third slot; or the fifth lock member is provided with the third slot, and the sixth lock member is provided with the movable third snap part; and
the third snap part is snapped in the third slot to lock the rotation of the third axis arm, and the third snap part is separated from the third slot to unlock the rotation of the third axis arm.

16. The handheld gimbal of claim 15, wherein the third lock assembly includes a movable third operation member, the third operation member being connected to the third snap part, the third operation member being pushed to operate to drive the third snap part to move to cause the third snap part to be snapped in the third slot or separated from the third slot.

17. The handheld gimbal of claim 16, wherein the third operation member is provided with a third protrusion, and the third snap part is provided with a fourth recess and a fifth recess at an interval, when the third protrusion is located in the fourth recess, the third snap part being snapped in the third slot, and when the third protrusion is located in the fifth recess, the third snap part being separated from the third slot.

18. The handheld gimbal of claim 15, wherein the third lock assembly includes a third drive member, the third drive member being configured to drive the third snap part to be snapped in the third slot and/or separated from the third slot.

19. The handheld gimbal of claim 18, wherein the third lock assembly includes a second block sheet, the second block sheet being mounted in the third axis arm, and the third drive member includes a second elastic member, the second elastic member being clamped between the second block sheet and the third snap part.

20. The handheld gimbal of claim 19, wherein a surface of the second block sheet is provided with a second convex column, an end of the second elastic member being sleeved at the second convex column.

21. The handheld gimbal of claim 6, 11, or 18, wherein the first drive member, the second drive member, and the third drive member include at least one of an elastic member, a motor, a magnetic member, or an electromagnetic member.

22. The handheld gimbal of claim 14, wherein the leveled state means that the carrier carried by the handheld gimbal keeps balance by adjusting at least one of the first axis assembly, the second axis assembly, or the third axis assembly.

23. The handheld gimbal of claim 14, wherein when the handheld gimbal switches to the storage state, the carrier is located between the third motor and the second motor, and the first axis arm, the second axis arm, and the third axis arm overlap with each other.

24. A handheld gimbal comprising at least one axis assembly, the handheld gimbal being configured to carry and adjust a carrier through the at least one axis assembly, wherein the handheld gimbal further includes a lock assembly, the lock assembly being configured to lock the handheld gimbal in a leveled state, the leveled state being used to adjust the at least one axis assembly to cause the carrier carried by the handheld gimbal to keep balance.

25. The handheld gimbal of claim 24, wherein the at least one axis assembly includes three axis assemblies, when the handheld gimbal is in the leveled state, the three axis assemblies being staggered with each other.

26. A handheld gimbal comprising at least two axis assemblies, the handheld gimbal being configured to carry a carrier, wherein the handheld gimbal further includes a lock assembly, the lock assembly being configured to lock the handheld gimbal in a storage state, when the handheld gimbal is in the storage state, the at least two axis assemblies overlapping with each other.

27. The handheld gimbal of claim 27, wherein the at least two axis assemblies include three axis assemblies, when the handheld gimbal is in the storage state, the three axis assemblies overlapping with each other.
